# EUROPEAN PATENT SPECIFICATION

(11) **EP 0 347 006 B1**
(45) Date of publication and mention of the grant of the patent: **01.03.1995**
(21) Application number: 89201569.4
(22) Date of filing: 16.06.1989
(51) Int. Cl.: A23D 7/00, A23D 7/02

(54) **Butter-like spread**
Butterähnlicher Brotaufstrich
Beurre artificiel à tartiner

(30) Priority: 17.06.1988 GB 8814478
(43) Date of publication of application: 20.12.1989
(73) Proprietor: UNILEVER N.V., 3013 AL Rotterdam (NL); UNILEVER PLC, London EC4P 4BQ (GB)
(72) Inventor: van Heteren, Jan, Esher Surrey KT10 9TD (GB); Moran, David Patrick Joseph, Covington Hunts (GB)
(74) Representative: Mulder, Cornelis Willem Reinier, Dr.

(56) References cited:
- EP-A- 0 078 568
- EP-A- 0 096 631
- EP-A- 0 098 663
- EP-A- 0 115 655
- EP-A- 0 264 149
- EP-A- 0 276 517
- US-A- 4 425 370

## Description

The present invention relates to butter-like spreads containing a fat with a relatively high level of fat solids in granular form and to processes for producing said spreads, which involve churning an o/w emulsion.

In the context of the present invention we mean by churning a process which comprises phase inversion of an oil-in-water emulsion.

By a relatively high level of fat solids we mean: a fat which at refrigerator temperatures (5-10°C) has a level of crystallized fat which is higher than 25 and preferably ranges from 40-85%.

In general, freshly churned margarines are butter-like in their properties. However, during storage and especially after temperature cycling during storage the butter-like texture and mouthfeel of the spreads is lost.

By butter-like spreads we mean: plastic, cool-melting products giving an oral response, particularly a palate break-down which closely approaches that of dairy butter.

The present invention is concerned both with margarines, that is w/o emulsion spreads with around 80% fat, and further with spreads of a reduced or low fat content (by which terms we mean: levels of fat lower than 80% and preferably ranging from 30-65 wt.% of the total emulsion), which are spreadable at refrigerator temperatures (5-10°C).

Butter-like spreads are discussed in GB 614 925. In that specification there are disclosed "emulsions consisting of particles of oil or fat dispersed in a continuous phase of similar substances." These emulsions are noted as having a higher viscosity at elevated temperatures than would otherwise be expected. It is stated in this citation that attempts had been made to prepare a margarine from an emulsion of the oil-in-water type, that is a cream, which had properties similar to butter. It is also stated that the results obtained by such methods did not justify the use of the complicated methods which had been employed, and the products obtained were not of the oil-in-oil type. The citation teaches the preparation of an oil-in-oil emulsion by preparing a cream and emulsifying this with an oil of lower melting point than the fat of the cream but which is solid at normal temperatures.

The above-mentioned patent uses, for example, hardened cocoa-nut fat with a melting point of 38-40°C and hardened whale oil with a melting point of 40-42°C. It should be noted, for the avoidance of doubt, that the cocoa-nut and the similarly named coconut are completely different fruits, the cocoa-nut, or cocoa-bean, is the fruit of the Theobroma cacao plant, whereas the coconut is the fruit of the Cocos nucifera plant. The cocoa-nut fat at 40°C is blended with a water phase at 15°C to form an oil-in-water emulsion at about 30°C. At this lower temperature the cocoa-nut fat is solid. The addition of fat to the water phase was so arranged that, during mixing, the components were forced through an aperture of sufficiently small size to act as a jet whereby the maximum particle size of the emulsion is determined. The oil-in-water emulsion is then emulsified into an oil mixture at a temperature held below the melting point of the cocoa fat. The resulting product contains so-called "duplex" structure in which dispersed water droplets contain dispersed oil droplets within them.

The product is described as feeling less "cold" in the mouth than a control margarine and said to spread better at 10°C. These effects are believed to be associated with an interphase film surrounding the particles of dispersed fat, according to the cited document.

Seen in the light of the above-mentioned prior art, the present specification is concerned with the technical problem of how the cool melting properties of butter can be attained by avoiding the formation of a duplex structure. This is essentially achieved by employing a fat blend with a specific solids line and ensuring that the higher melting triglycerides are dispersed in a separate phase of a sufficiently small particle size that little or no duplex formation occurs upon phase inversion.

EP-A-0 264 149 provides a process for imparting heat stability to tropical margarines.

Surprisingly, we have determined that the creams formed as intermediates in the production of our spreads are themselves stable enough to be articles of commerce.

The present invention describes a W/O emulsion spread exhibiting butterlike properties obtainable by a churning process comprising
a) an aqueous phase and
b) a fat phase said phase displaying overall the following fat solids profile expressed in percentages determined by nuclear magnetic resonance at the indicated temperatures:

| | |
|---|---|
| N₅ = 40-95 | N₃₀ = 0.1-15 |
| N₁₀ = 20-90 | N₃₅ = 0-5 |
| N₂₀ = 15-35 | |

characterised in that said fat phase includes dispersed fat granules not forming part of a three-dimensional fat crystal lattice structure , the granules having an average particle size not exceeding 20 »m, preferably ranging from 3-6 »m.

Vegetable fats which meet the above requirements with regard to the fat solids profile are for instance palm oil fractions obtained by fractionation of palm oil, e.g. by dry fractionation (in the absence of a solvent), by wet fractionation (in the presence of an organic solvent such as acetone or hexane) or by fractionation using an aqueous medium containing a surfactant.

A particularly suitable fat is characterized by the following triglyceride composition :
SSS triglycerides 1-9 wt.%;
SOS triglycerides 30-75 wt.%;
SSO triglycerides 3-12 wt.%,
the remainder of fat up to 100 wt.% consisting of SOO and SLS triglycerides wherein
S = saturated C₁₆-C₁₈ fatty acids residue;
O = oleic acid residue;
L = linoleic acid residue.

Fats meeting the above triglyceride specifications are wet- or dry-fractionated palm mid-fractions. The preparation of such fractions has been described in the prior art. See for instance US 4 205 095, US 3 012,891, GB 827 172, GB 1 431 781 and GB 1 390 936, included herein by way of reference.

Palm mid-fractions obtained by wet fractionation of palm oil are characterized by the following triglyceride profile:
SSS = 1-5 wt.%;
SOS = 50-75 wt.%;
SSO = 3-9 wt.%,
the remainder of the triglycerides of fat (i) up to 100 wt.% consisting of SOO and SLS triglycerides.

Such a palm mid-fractions can be used in proportions up to 70 wt.%, preferably exceeding 30 wt.% and ideally ranging from 35-60 wt.% based on the total amount of fat of the spread.

Palm mid-fractions obtained by 2-step fractionation in the absence of a solvent are characterized by the following triglyceride profile:
SSS = 1-9 wt.%;
SOS = 30-50 wt.%;
SSO = 5-12 wt.%,
the remainder of the triglycerides of fat (i) up to 100 wt.% consisting of SOO and SLS triglycerides.

Such palm mid-fractions can be incorporated in the fatty phase of the spreads in a proportion preferably exceeding 30 wt.% and ideally ranging from 31-85 wt.% based on the total amount of fat in the spread.

Other vegetable fats (i) which meet these criteria are the hardened lauric fats which have not been interesterified. These include the hydrogenated palm kernel fats, particularly palm kernel fats having a melting point in the range 37-42°C. Palm kernel fat of a melting point of 39°C is considered representative of this class.

In both the above instances, with granulated palm mid fraction and with granulated, hardened palm kernel fat, the products obtained do not show melting and recrystallisation of the fat globules on normal temperature cycling. Moreover, the high-melting fat contributes to the cool-melting properties of the product without forming a three-dimensional lattice structure and thus producting a "tallowy" mouthfeel.

As a yet further alternative to the use of conventional fats as the granular fats, use may be comprised of the so-called fat replacers such as the sucrose fatty acid esters. Although these fats have been proposed as hardstocks for spreads, the present application finds them as a mouthfeel-modifying agent in which the high-melting granular SPE provides the cool-melting properties of butter without unacceptably increasing the hardness of the product. Consequently, the word fat should in the present application be construed as meaning fat or fat replacer.

The fat blend can in addition contain fats (ii) which are selected from the group consisting of butterfat or a butterfat fraction and an interesterified mixture obtained from a hydrogenated palmitic or stearic fat and a hydrogenated lauric fat, non-hydrogenated laurics, palm oil, tallow fat or fractions thereof. These selected fats contribute to producing fat blends which do not display waxiness (because of their low level of fat solids, e.g. less than 5%) and which are sharp-melting.

The amount of these selected fats to be incorporated in the fat of the spread depends on their price (these fats are relatively expensive) and on the properties of the spread aimed at. In most cases these fats are used in proportions ranging from 1 to 30 wt.% based on the total amount of fat.

The fat blends used in the spreads according to the invention may also comprise an oil (iii) which does not contribute to the structure of the spread since they do not contain any crystallized fat at 10°C. The proportion of oil (iii) used in the fatty phase of the spread may vary within wide ranges. In conjunction with the structural fats (i) and (ii) mentioned above, proportions of liquid oils preferably range from 30-69 wt.% based on the total amount of fat.

In the spreads according to the invention, crystallized fat is present in granular form with an average particle size most preferably ranging from 3-6 micrometer.

The aqueous phase of the w/o emulsion spreads according to the invention require attention, especially when it constitutes more than 20 wt.% of the total emulsion.

Reduced fat and low fat spreads containing 30-70 wt.% and preferably 35-65 wt.% of aqueous phase will have an aqueous phase with an appropriate viscosity.

Thickening or gelling of the aqueous phase can be achieved using thickening or gelling agents well known in the art. Preferably a thickening or gelling agent system comprising protein, i-carrageenan, calcium alginate or mixtures thereof are used.

Ideally the aqueous phase of the spreads contains 1-15 wt.% milk protein and 1-5 wt.% gelatin. Aqueous phases containing 3-10 wt.% sodium caseinate and 2-5 wt.% gelatin appeared to be very useful for the purpose of the present invention.

We have determined that the butter-like spreads of the present invention can be produced by a number of processes. However, three processes in particular are especially suitable.

The w/o emulsion spreads according to the invention are obtainable according to a process comprising the following steps:
a) producing an o/w emulsion cream by mixing an aqueous phase with a fat phase containing a fat having the following fat solids profile:

| | |
|---|---|
| N₅ = 40-95 | N₃₀ = 0.1-15 |
| N₁₀ = 25-90 | N₃₅ = 0-5; |
| N₂₀ = 15-35 | |

b) heating the mixture to a temperature sufficiently high to melt the fat;
c) homogenizing the mixture to achieve an average droplet size of dispersed fat not exceeding 20 micrometer and obtain a cream; and
d) feeding the homogenized cream in a cooling and churning unit wherein crystallization and phase inversion take place.

According to a preferred embodiment the mixture of the fat phase and aqueous phase is :
a) heated to 40-80°C;
b) homogenized to achieve a droplet size ranging from 3-6 micrometer to obtain a cream;
c) which cream is cooled and optionally subjected to a mild shear regime, whereby the temperature drops to 15-25°C;
d) which partly crystallized and partly inverted emulsion is finally further worked and cooled, whereby the temperature further drops to 5-13°C, whereby a w/o emulsion spread is obtained.

It should be noted that when a butter fat is employed as the high-solids fat the preferred temperature during the initial crystallization stage is 5-15°C rather than 15-25°C.

The partly inverted and crystallized emulsion is further worked and cooled, for instance in a Votator ^{R}, a unit of the vacuum plodder type, or in an afterworker of a continuous butter-making machine.

As an alternative to the above-mentioned process, it is possible to granulate one of two or more creams which are then mixed before churning.

The first alternative process comprises the steps of:
a) producing an o/w emulsion cream by mixing an aqueous phase with a fat phase consisting of a fat having a fat solids profile such that ≧ 50% of fat present is solid at 20°C and ≦ 15% of the fat present is solid at 35°C.
b) heating the mixture to a temperature sufficiently high to melt the fat;
c) homogenizing the mixture to achieve an average droplet size of dispersed fat not exceeding 10 micrometer and obtain a cream;
d) cooling the cream so as to granulate the fat phase;
e) blending the granulated fat-containing cream with a further cream such that the total solids is

| | |
|---|---|
| N₅ = 40-95 | N₃₀ = 0.1-15 |
| N₁₀ = 25-90 | N₃₅ = 0-5; |
| N₂₀ = 15-35 | |

and
f) feeding the blend to a cooling and churning unit wherein phase inversion takes place.

As a yet further alternative it is possible to prepare two creams separately but mix the creams before granulation. Indeed, by variation of the extent of crystallization before and after mixing of the high-solids cream with the other fats it is envisaged that a range of products may be obtained with differing types of granules.

Accordingly, a yet further aspect of the present invention subsists in a process comprising the steps of:
a) producing an o/w emulsion cream by mixing an aqueous phase with a fat phase containing a fat having a fat solids profile such that ≧ 50% of solid fat is present at 20°C and ≦ 15% of solid fat is present at 35°C;
b) blending the o/w emulsion thus obtained with one or more further creams such that the blend has a solids fat profile:

| | |
|---|---|
| N₅ = 40-95 | N₃₀ = 0.1-15 |
| N₁₀ = 25-90 | N₃₅ = 0-5; |
| N₂₀ = 15-35 | |

c) heating the blend to a temperature sufficiently high to melt at least a portion of the fat;
d) homogenizing the blend to achieve an average droplet size of dispersed fat not exceeding 20 micrometer and obtain a cream; and
e) feeding the homogenised blend into a cooled churning unit wherein further crystallization and phase inversion take place.

In the first above-mentioned process according to the invention, churned spreads are produced in which the proportion of the aqueous phase is substantially equal to the proportion of the aqueous phase in the starting o/w cream, thereby avoiding loss of material and effluent problems. This particularly applies when the fat content of the starting cream is about 50% or more.

In the second and third above-mentioned processes churned spreads are produced in which the proportion of the aqueous phase is substantially lower than that of the starting o/w cream. The buttermilk produced by this process may be put to other uses.

The creams according to the present invention comprise a continuous water phase and a fat phase dispersed in droplets not exceeding 20 micrometers in diameter, said fat phase having overall a fat solids profile at the indicated temperature of :

| | | |
|---|---|---|
| N₅ = 40-95% | N₁₀ = 25-90% | N₂₀ = 15-35% |
| N₃₀ = 0.1-15% | N₃₅ = 0-5% | |

said droplets consisting of a first population of droplets of fat having having a fat solids profile such that => 50% of the fat is solid at 20°C and <= 15% of the fat is solid at 35°C, and a second population of droplets of fat having a fat solids profile such that the overall fat solids profile subsists.

The other characteristics of the fat phase of the creams are as the characteristics of the fat phase of the spreads as described above.

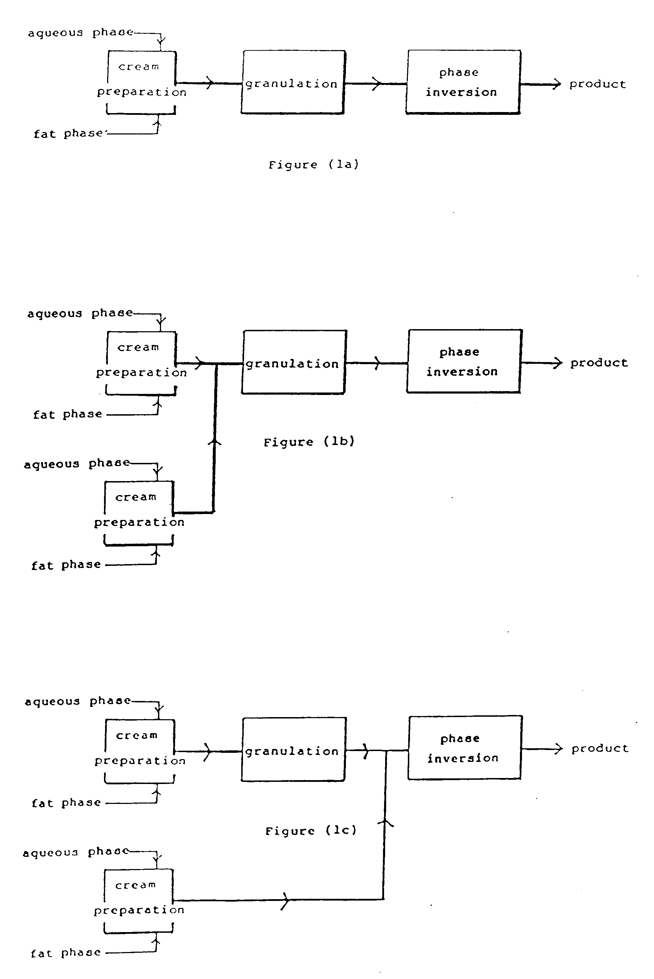

In order to illustrate clearly the differences and similarities between these three processing methods reference is made to the attached Figure 1 in which:
Figure (1a) represents the preparation of a product by mixing all the ingredients into a cream and then granulating this cream;
Figure (1b) represents the preparation of a product by preparation of two separate creams which are mixed before granulation; and
Figure (1c) represents the preparation of a product by granulation of one of two creams before mixing the granulated and non-granulated process streams.

Churning by distributing the higher melting triglycerides of the structural fat as small granules of an average size not exceeding 20 or preferably 10 micrometer allows the cool melting characteristics of the blend to be appreciated while maintaining the hardness of the product within acceptable ranges, i.e. values lower than 5,000 g/cm² and preferably ranging from 1,500-4,000 g/cm². The choice of aqueous phase components helps maintain a viscosity which is sufficiently low to allow phase inversion from o/w to w/o to take place, but which is high enough to inhibit loss of aqueous phase. The gelled nature of the aqueous phase prevents water loss on spreading.

Although the preferred process step for homogenizing the high-solids cream involves the use of a homogenizer of the conventional type, other means for dispersing the fat phase of the cream through the aqueous phase can be employed, provided that a sufficiently fine dispersion is achieved to substantially avoid the formation of a duplex structure upon phase inversion.

The invention will now be illustrated in the following Examples.

### Example 1

A w/o emulsion spread of the following composition was prepared:

| | wt.% |
|---|---|
| Fat blend | 50.0 |
| Lecithin | 0.2 |
| Monoglyceride | 0.2 |
| Gelatin | 1.7 |
| Sodium caseinate | 4.0 |
| Potassium sorbate | 0.1 |
| Sodium chloride | 1.0 |
| Skimmilk powder | 0.9 |
| Water (acidified with lactic acid to pH 6.0) | up to 100 wt.% |

The fat blend consisted of:
1) palm mid-fraction (PMF) obtained by 2 step fractionation of palm oil in acetone : 43%;
2) palm oil : 28%;
3) sunflower oil : 29%.

The fat solids profile of the PMF was as follows:

| | |
|---|---|
| N₅ = 95.0 | N₃₀ = 3.6 |
| N₁₀ = 92.7 | N₃₅ = 0.5, |
| N₂₀ = 83.1 | |

The triglyceride profile of the PMF was as follows:
SSS = 5.2%;
SSO = 6.5%,
SOS = 75.5%,
the remainder consisting of SOO and SLS triglycerides.

The fat solids profile of the total fat blend was as follows:

| | |
|---|---|
| N₅ = 57.7 | N₃₀ = 4.1 |
| N₁₀ = 50.3 | N₃₅ = 1.7, |
| N₂₀ = 24.1 | |

The palm mid-fraction was produced as follows:
a) 300 g of refined deodorized palm oil of I.V. 53.4 were mixed with 1.5 litres of acetone and the mixture warmed until a clear solution was obtained (30°C). The solution was then cooled to 6.5°C over 1.5 hours while being gently stirred with a glass rod. It was allowed to stand for 0.5 hour at 6.5°C and then filtered through a cooled Buchner funnel with vacuum. The cake was pressed with a glass plunger and then washed twice on the filter with 250 ml acetone at 5°C for each wash, the cake being pressed between each wash. It was then removed from the filter and the residual acetone distilled off under vacuum. The yield was 93.9 g of a reaction product having an I.V. of 28.9.
b) to 80 g of the product of stage (a) were added 80 ml of acetone and the mixture warmed to 45°C. To this wered added 400 ml of acetone at 19°C with stirring and the final temperature of the mixture adjusted to 26°C. It was allowed to stand at this temperature for 20 minutes and then filtered through a Buchner funnel, pressed and washed on the filter with 250 ml acetone at 26°C. The filtrate and wash liquor were combined and the acetone removed by distillation under vaccum. The yield was 67.5 g.

The spread was prepared as follows:
A cream was produced by homogenization of all ingredients except gelatin at 60°C to achieve an average droplet size of about 6 micrometer. The temperature was raised to 75°C for pasteurization purposes.

A concentrated solution of the required amount of gelatin in water was first allowed to hydrate for 1 hour before being heated to 60°C. This solution was added to the hot cream. The cream containing gelatin was poured hot into a tank jacketed at 10°C, fitted with a scraper gate type stirrer operating at 30 r.p.m. At a temperature round 19°C, phase inversion took place. The product was transferred to a vacuum plodder unit wherein it was further cooled and worked for 5 minutes. During this period, substantially complete crystallization and phase inversion took place.

The spread leaving the plodder unit had a temperature of about 10°C.

The hardness of the product measured at 5°C was 2030 g/cm².

The product was spreadable from the refrigerator, it had a plastic consistency and had good coolness properties on consumption. Photo micrographs were taken using phase contrast at a magnification of 400. The water drops and granules appear as bright and dark spots. The assessed average size of the granules was about 6 micron.

The analytical data in this and the following Examples were determined according to the following references:

The fat solids profile was measured according to the method described by van Putte and van den Enden in J. A. Oil Chem. Soc., 51 (1974), p. 316.

The hardness of the spreads was measured according to the method described by Haighton in Journal of the Am. Oil Chemists' Soc. 36 (1959), p.p. 345-348.

The triglyceride composition can be determined by argentation thin layer chromatography on silicagel plates sprayed with a silver nitrate solution.

### Example 2

A w/o emulsion spread of the following composition was produced.

| | wt.% |
|---|---|
| Fat blend | 59.0 |
| Lecithin | 0.2 |
| Monoglyceride | 0.2 |
| Gelatin | 1.4 |
| Sodium caseinate | 3.3 |
| Potassium sorbate | 0.1 |
| Sodium chloride | 1.0 |
| Skimmilk powder | 0.7 |
| Water (acidified with lactic acid to pH 6.0) | up to 100 wt.% |

The fat blend consisted of:
i) palm mid-fraction (PMF) obtained by 2-step dry fractionation of palm oil : 80% wt.%;
ii) sunflower oil : 20%.

The fat solids profile of this PMF was:

| | |
|---|---|
| N₅ = 70.7 | N₃₀ = 1.3 |
| N₁₀ = 60.9 | N₃₅ = 0. |
| N₂₀ = 29.2. | |

The triglyceride profile of the PMF was:
SSS = 2.0%;
SOS = 45.1%;
SSO = 6.4%,
the remainder consisting of SOO and SLS triglycerides.

The fat solids profile of the total fat blend was:

| | |
|---|---|
| N₅ = 53.1 | N₃₀ = 0.1 |
| N₁₀ = 43.8 | N₃₅ = 0.0 |
| N₂₀ = 23.1. | |

The palm mid-fraction was produced as follows:
Palm oil is heated to 65°C to melt the oil. The heated palm oil is then slowly cooled to 27°C. A first solid fraction is separated from a first liquid fraction. The first liquid fraction (first olein) is heated until essentially crystal-free and is subsequently cooled to 17°C, whereby a second solid fraction (PMF) is formed, which is separated from a second liquid fraction.

Spreads were produced according to the procedure outlined in Example 1.

The spreads tested by a panel of experts had substantially the same properties as the spreads of Example 1.

The hardness of these spreads measured at 5°C was C₅ = 3270 g/cm².

### Example 3

The Examples 1 and 2 relate to the process embodiment in which all the ingredients of the eventual fat phase are mixed before homogenization. This example relates to the process embodiment in which separately prepared creams are mixed after homogenization.

A cream of the following composition was prepared:

| | |
|---|---|
| Fat blend | 38.5 |
| Monoglyceride | 0.2 |
| Sweet buttermilk powder | 5.8 |
| Water | to 100.0 |

The fat blend consisted of:

| | |
|---|---|
| 1) Palm kernel fat (hardened) | 10.0% |
| 2) Soy bean oil | 46.6% |
| 3) Rapeseed oil (hardened) | 16.6% |
| 4) Soy bean oil (hardened) | 23.1% |
| 5) Palm oil (hardened) | 3.7% |

The fat solids profile of the hardened palm kernel fat was as follows:

| | |
|---|---|
| N₁₀ = 94% | N₂₅ = 57.7% |
| N₁₅ = 90.3% | N₃₀ = 35% |
| N₂₀ = 82% | N₃₅ = 10% |
| | N₄₀ = 5.3% |

The fat solids profile of the entire fat phase was as follows:

| | |
|---|---|
| N₁₀ = 36.9% | N₂₅ = 10.6% |
| N₁₅ = 27.3% | N₃₀ = 4.6% |
| N₂₀ = 18.6% | N₃₅ = 1.0% |

The spread was prepared as follows:
A first cream was produced by homogenization of hardened palm kernel fat in water at a fat level of 36% on cream. A second separate cream was produced from the remaining water phase ingredients and the remaining fats. The creams were homogenised so as to achieve an average droplet size of around 4 microns, and mixed. The temperature was raised to 85°C for pasteurization purposes, and the mixed cream cooled to 5°C for churning. Churning was performed in a conventional continuous butter-maker at pilot plant scale.

The spread leaving the butter-maker had a temperature of about 9°C.

The hardness of the product measured at 5°C was 1440 g/cm².

The product was spreadable from the refrigerator, it had a plastic, butter-like consistency and good coolness properties on consumption.

### Comparative Example

In this Example the results are given of comparative experiments between a product A obtained by phase inversion and containing granulated fat and a product B of the same formulation containing non-granulated fat obtained by straightforwardly processing a w/o emulsion in a Votator®.

| Formulation | % |
|---|---|
| Gelatin | 1.37 |
| Sodium caseinate | 3.33 |
| Potassium sorbate | 0.08 |
| Salt | 1.0 |
| Skimmilk powder | 0.68 |
| Water | 34.54 |
| Palm fat fraction | 46.87 (N₅= 71; N₁₀= 61; N₃₀= 1; N₃₅= 0) |
| Sunflower oil | 11.72 |
| Lecithin | 0.2 |
| Hymono 8903 (monoglyceride) | 0.2 |
| Colour | 0.01 |
| Flavour | Trace |

| Product | A | B | Butter |
|---|---|---|---|
| Physical data | | | |
| Hardness (yield point) 5°C | 3270 | 5345 | - |
| Spreading factor | 2 | 2 | - |
| Salt release (temperature of 50% release) | 27.5 | 28.0 | - |
| Temperature of 100% release | 28.5 | 29.0 | - |

| Sensory data | | | |
|---|---|---|---|
| Ease of spreading | 6.97 | 5.40 | 3.98 |
| Elasticity | 6.88 | 5.52 | 5.09 |
| Coolness | 5.71 | 5.92 | 3.99 |
| Firmness | 4.93 | 6.38 | 7.09 |

It may be seen that sample A is easier to spread, is softer and more plastic (as described by a trained panel of assessors). However, both products show these properties to a greater degree than standard butter.

## Claims

1. A W/O emulsion spread exhibiting butterlike properties obtainable by a churning process comprising
a) an aqueous phase and
b) a fat phase said phase displaying overall the following fat solids profile expressed in percentages determined by nuclear magnetic resonance at the indicated temperatures:
| | |
|---|---|
| N₅ = 40-95 | N₃₀ = 0.1-15 |
| N₁₀ = 20-90 | N₃₅ = 0-5 |
| N₂₀ = 15-35 | |
characterised in that said fat phase includes dispersed fat granules not forming part of a three-dimensional fat crystal lattice structure , the granules having an average particle size not exceeding 20 »m, preferably ranging from 3-6 »m.

2. Spread according to Claim 1, wherein the hardness measured at 5°C does not exceed 5,000 g/cm² and preferably ranges from 1,500-4,000 g/cm².

3. Spread according to Claim 1, wherein the fat or fat blend constitutes 30-80 wt.% of the total emulsion.

4. Spread according to Claim 1, wherein the fat or fat blend constitutes 35-65 wt.% of the total emulsion.

5. Spread according to Claim 1, wherein the fatty phase comprises a fat (i) characterized by the following triglyceride composition:
SSS triglycerides 1-9 wt.%;
SOS triglycerides 30-75 wt.%;
SSO triglycerides 3-12 wt.%,
the remainder of fat (i) up to 100 wt.% consisting of SOO and SLS triglycerides wherein:
S = saturated C₁₆-C₁₈ fatty acids residue;
O = oleic acid residue;
L = linoleic acid residue.

6. Spread according to Claim 5, wherein fat (i) is a palm mid-fraction characterized by the following triglyceride composition:
SSS = 1-5 wt .%;
SOS = 50-75 wt.%;
SSO = 3-9 wt.%,
the remainder of the triglycerides of fat (i) up to 100 wt.% consisting of SOO and SLS triglycerides.

7. Spread according to Claim 5, wherein fat (i) constitutes more than 30 wt.% and preferably 35-80 wt.% based on the total amount of fat.

8. Spread according to Claim 5, wherein fat (i) is a palm mid-fraction characterized by the following triglyceride profile:
SSS = 1-9 wt.%;
SOS = 30-50 wt.%;
SSO = 5-12 wt.%,
the remainder of the triglycerides of fat (i) up to 100 wt.% consisting of SOO and SLS triglycerides.

9. Spread according to Claim 8, wherein fat (i) constitutes more than 30 wt.% and preferably 31-85 wt.% based on the total amount of fat.

10. Spread according to Claim 1, wherein the fat phase comprises a fat (ii) selected from butterfat or a butterfat fraction, a hydrogenated lauric fat or a fraction thereof and an interesterified mixture obtained from a hydrogenated palmitic or stearic fat and a hydrogenated lauric fat, non-hydrogenated laurics, palm oil, tallow fat or fractions thereof.

11. Spread according to Claim 10, wherein fat (ii) constitutes 1-30 wt.% of the total fat.

12. Spread according to Claim 1, wherein the fat phase comprises an oil (iii) free from crystallized fat at 10°C.

13. Spread according to Claim 12, wherein oil (iii) constitutes 30-69 wt.% of the total fat.

14. Spread according to Claim 1, wherein the aqueous phase constitutes 30-70 wt.%, and preferably 35-65 wt.%, of the total emulsion.

15. Spread according to Claim 1, wherein the aqueous phase contains a gelling or thickening agent comprising a protein, i-carrageenan, calcium alginate or mixtures thereof.

16. Spread according to Claim 15, wherein the aqueous phase contains 1-15 wt.% milk protein and 1-5 wt.% gelatin based on the aqueous phase.

17. Spread according to Claim 16, wherein the aqueous phase contains 3-10 wt.% sodium caseinate and 2-5 wt.% gelatin.

18. A process for producing a churned w/o emulsion spread according to Claim 1, which comprises :
a) producing an o/w emulsion cream by mixing an aqueous phase with a fat phase containing a fat having the following fat solids profile:
| | |
|---|---|
| N₅ = 40-95 | N₃₀ = 0.1-15 |
| N₁₀ = 20-90 | N₃₅ = 0-5; |
| N₂₀ = 15-35 | |
b) heating the mixture to a temperature sufficiently high to melt the fat;
c) homogenizing the mixture to achieve an average droplet size of dispersed fat not exceeding 20 micrometer and obtain a cream, and
d) feeding the homogenized cream in a cooling and churning unit wherein crystallization and phase inversion take place.

19. A process according to Claim 18, wherein the mixture of the fat phase and aqueous phase is:
a) heated to 40-80°C;
b) homogenized to achieve a droplet size ranging from 3-6 micrometer to obtain a cream;
c) which cream is cooled while applying a mild shear regime, whereby the temperature drops to 15-25°C;
d) which partly crystallized and partly inverted emulsion is finally further worked and cooled, whereby the temperature further drops to 5-13°C, whereby a w/o emulsion spread is obtained.

20. A process according to Claim 18, wherein the partly inverted and crystallized emulsion is further worked and cooled in a Votator^{R}, a unit of the vacuum plodder type, or in an afterworker of a continuous butter-making machine.

21. A process according to Claim 18, wherein the proportion of the aqueous phase in the churned w/o emulsion spread is substantially equal to the proportion of the aqueous phase in the starting o/w emulsion.

22. A process for producing a churned w/o emulsion spread according to claim 1, which comprises:
a) producing an o/w emulsion cream by mixing an aqueous phase with a fat phase consisting of a fat having a fat solids profile such that ≧ 50% of the fat present is solid at 20°C and ≦ 15% of the fat present is solid at 35°C;
b) heating the mixture to a temperature sufficiently high to melt the fat;
c) homogenizing the mixture to achieve an average droplet size of dispersed fat not exceeding 20 micrometer and obtain a cream:
d) cooling the cream so as to granulate the fat phase;
e) blending the granulated fat-containing cream with a further cream to obtain a blend in which the total solids content at the indicated temperatures is:
| | |
|---|---|
| N₅ = 40-95 | N₃₀ = 0.1-15 |
| N₁₀ = 25-90 | N₃₅ = 0-5 |
| N₂₀ = 15-35 | |
and
f) feeding the blend to a cooling and churning unit wherein phase inversion takes place.

23. A process according to claim 22, wherein;
a) in step (b) the mixture of fat phase and aqueous phase is heated to 50-90°C;
b) in step (c) the emulsion is homogenised to achieve a droplet size ranging from 2-5 »m (microns): and
c) in step (f) churning is performed at 4-10°C.

24. A process for producing a churned w/o emulsion spread according to claim 1, which comprises:
a) producing an o/w emulsion cream by mixing an aqueous phase with a fat phase containing a fat having a fat solids profile such that ≧ 50% of the fat is solid at 20°C and ≦ 15% of the fat is solid at 35°C;
b) blending the o/w emulsion thus obtained with one or more further creams such that the blend obtained has a fat solids profile at the indicated temperatures of:
| | |
|---|---|
| N₅ = 40-95 | N₃₀ = 0.1-15 |
| N₁₀ = 25-90 | N₃₅ = 0-5 ; |
| N₂₀ = 15-35 | |
c) heating the blend to a temperature sufficiently high to melt at least a a portion of the fat;
d) homogenising the blend to achieve an average droplet size of dispersed fat not exceeding 20 micrometer and obtain a cream; and
e) feeding the homogenised blend into a cooling and churning unit wherein further crystallization and phase inversion takes place.

25. An oil-in-water emulsion cream comprising a fat phase dispersed in droplets not exceeding 20 micrometers in diameter, said fat phase having overall a fat solids profile at the indicated temperature of:
| | | |
|---|---|---|
| N₅ = 40-95 | N₁₀ = 25-90 | N₂₀ = 15-35 |
| N₃₀ = 0.1-15 | N₃₅ = 0-5 | |
said droplets consisting of a first population of droplets of fat having having a fat solids profile such that ≧ 50% of the fat is solid at 20°C and ≦ 15% of the fat is solid at 35°C, and a second population of droplets of fat having a fat solids profile such that the overall fat solids profile subsists.

26. An oil-in-water emulsion cream according to Claim 25, wherein the fatty phase comprises a fat (i) having the following triglyceride composition :
SSS triglyceride 1-9 wt.%
SOS triglyceride 30-75 wt.%
SSO triglyceride 3-12 wt.%
the remainder of the fat (i) up to 100 wt.% consisting of SOO and SLS triglycerides wherein :
S = saturated sixteen or eighteen carbon fatty acid residue,
O = oleic acid residue,
L = linoleic acid residue.

## Patentansprüche

1. Durch ein Kirnverfahren erhältlicher W/O-Emulsionsbrotaufstrich mit butterähnlichen Eigenschaften, umfassend
a) eine wäßrige Phase und
b) eine Fettphase, die insgesamt das folgende Fettfeststoffprofil zeigt, ausgedrückt in Prozentsätzen und bestimmt durch NMR bei den angegebenen Temperaturen:
| | |
|---|---|
| N₅ = 40-95, | N₃₀ = 0,1-15, |
| N₁₀ = 20-90, | N₃₅ = 0 - 5 |
| N₂₀ = 15-35, | |
dadurch gekennzeichnet, daß die Fettphase dispergierte Fettkörnchen einschließt, die keinen Teil einer dreidimensionalen Fettkristallgitterstruktur bilden, wobei dies Körnchen eine durchschnittliche Teilchengröße von nicht mehr als 20 »m, vorzugsweise im Bereich von 3 bis 6 »m, haben.

2. Brotaufstrich nach Anspruch 1, in welchem die bei 5°C gemessene Härte nicht mehr als 5 000 g/cm² beträgt und vorzugsweise im Bereich von 1 500 bis 4 000 g/cm² liegt.

3. Brotaufstrich nach Anspruch 1, in welchem das Fett oder Fettgemisch 30 bis 80 Gew.-% der gesamten Emulsion ausmacht.

4. Brotaufstrich nach Anspruch 1, in welchem das Fett oder Fettgemisch 35 bis 65 Gew.-% der gesamten Emulsion ausmacht.

5. Brotaufstrich nach Anspruch 1, in welchem die Fettphase ein Fett (i) umfaßt, das durch die folgende Triglyceridzusammensetzung gekennzeichnet ist:
SSS-Triglyceride 1 bis 9 Gew.-%
SOS-Triglyceride 30 bis 75 Gew.-%
SSO-Triglyceride 3 bis 12 Gew.-%,
wobei der Rest von Fett (i) bis zu 100 Gew.-% aus SOO- und SLS-Triglyceeriden besteht, worin
S = gesättigter C₁₆-C₁₈-Fettsäurerest
O = Ölsäurerest
L = Linolsäurerest
ist.

6. Brotaufstrich nach Anspruch 5, in welchem Fett (i) eine Palmmittelfraktion, gekennzeichnet durch die folgende Triglyceridzusammensetzung
SSS = 1 bis 5 Gew.-%
SOS = 50 bis 75 Gew.-%
SSO = 3 bis 9 Gew.-%,
ist, wobei der Rest der Triglyceride von Fett (i) auf 100 Gew.-% aus SOO- und SLS-Triglyceriden besteht.

7. Brotaufstrich nach Anspruch 5, in welchem Fett (i) mehr als 30 Gew.-%, vorzugsweise 35 bis 80 Gew.-%, bezogen auf die Gesamtmenge an Fett, ausmacht.

8. Brotaufstrich nach Anspruch 5, in welchem Fett (i) eine Palmmittelfraktion, gekennzeichnet durch das folgende Triglyceridprofil
SSS = 1 bis 9 Gew.-%
SOS = 30 bis 50 Gew.-%
SSO = 5 bis 12 Gew.-%,
ist, wobei der Rest der Triglyceride von Fett (i) auf 100 Gew.-% aus SOO- und SLS-Triglyceriden besteht.

9. Brotaufstrich nach Anspruch 8, in welchem Fett (i) mehr als 30 Gew.-%, vorzugsweise 31 bis 85 Gew.-%, bezogen auf die Gesamtmenge an Fett, ausmacht.

10. Brotaufstrich nach Anspruch 1, in welchem die Fettphase ein Fett (ii) umfaßt, das aus Butterfett oder einer Butterfettfraktion, einem hydrierten Laurinfett oder einer Fraktion davon und einer interesterifizierten Mischung, erhalten aus einem hydrierten Palmitin- oder Stearinfett und einem hydrierten Laurinfett, nichthydrierten Laurinfetten, Palmöl, Talgfett oder Fraktionen davon bestehenden Gruppe ausgewählt ist.

11. Brotaufstrich nach Anspruch 10, in welchem Fett (ii) 1 bis 30 Gew.-% des Gesamtfettes ausmacht.

12. Brotaufstrich nach Anspruch 1, in welchem die Fettphase ein Öl (iii) umfaßt, das bei 10°C frei von kristallisiertem Fett ist.

13. Brotaufstrich nach Anspruch 12, in welchem das Öl (iii) 30 bis 69 Gew.-% des gesamten Fettes ausmacht.

14. Brotaufstrich nach Anspruch 1, in welchem die wäßrige Phase 30 bis 70 Gew.-% und vorzugsweise 35 bis 65 Gew.-% der gesamten Emulsion ausmacht.

15. Brotaufstrich nach Anspruch 1, in welchem die wäßrige Phase ein Gelier- oder Verdickungsmittel enthält, welches ein Protein, i-Carrageenan, Calciumalginat oder Mischungen davon umfaßt.

16. Brotaufstrich nach Anspruch 15, in welchem die wäßrige Phase 1 bis 15 Gew.-% Milchprotein und 1 bis 5 Gew.-% Gelatine, bezogen auf die wäßrige Phase, enthält.

17. Brotaufstrich nach Anspruch 16, in welchem die wäßrige Phase 3 bis 10 Gew.-% Natriumkaseinat und 2 bis 5 Gew.-% Gelatine enthält.

18. Verfahren zur Herstellung eines gekirnten W/O-Emulsionsbrotaufstriches nach Anspruch 1, das umfaßt:
a) Herstellen eines O/W-Emulsionsrahms durch Mischen einer wäßrigen Phase mit einer Fettphase, die ein Fett mit dem folgenden Fettfeststoffprofil enthält:
| | |
|---|---|
| N₅ = 40 - 95 | N₃₀ = 0,1 - 15 |
| N₁₀ = 20 - 90 | N₃₅ = 0 - 5 |
| N₂₀ = 15 - 35 | |
b) Erhitzen der Mischung auf eine zum Schmelzen des Fettes ausreichend hohe Temperatur;
c) Homogenisieren der Mischung zur Erzielung einer durchschnittlichen Tröpfchengröße des dispergierten Fettes nicht über 20 Mikrometer und zur Erzielung eines Rahms und
d) Einführen des homogenisierten Rahms in eine Kühl- und Kirneinheit, in der die Kristallisation und Phaseninversion stattfindet.

19. Verfahren nach Anspruch 18, bei welchem die Mischung der Fettphase und wäßrigen Phase
a) auf 40 bis 80°C erhitzt wird,
b) zur Erzielung einer Tröpfchengröße im Bereich von 3 bis 6 Mikrometern zum Erhalt eines Rahm homogenisiert wird,
c) welcher Rahm unter Anlegen eines milden Scherplanes abgekühlt wird, wodurch die Temperatur auf 15 bis 25°C sinkt;
d) welche partiell kristallisierte und partiell invertierte Emulsion schließlich weiter bearbeitet und gekühlt wird, wodurch die Temperatur weiter auf 5 bis 13°C sinkt, was zu einem W/O-Emulsionsbrotaufstrich führt.

20. Verfahren nach Anspruch 18, bei welchem die partiell invertierte und kristallisierte Emulsion in einem Votator®, einer Einheit vom Vakuumstrangpreßtyp oder einer Nachbearbeitungsvorrichtung einer kontinuierlichen Butterherstellungsmaschine weiter bearbeitet und gekühlt wird.

21. Verfahren nach Anspruch 18, bei welchem der Anteil der wäßrigen Phase im gekirnten W/O-Emulsionsbrotaufstrich im wesentlichen gleich dem Anteil der wäßrigen Phase in der O/W-Ausgangsemulsion ist.

22. Verfahren zur Herstellung eines gekirnten W/O-Emulsionsbrotaufstriches gemäß Anspruch 1, das umfaßt:
a) Herstellen eines O/W-Emulsionrahms durch Mischen einer wäßrigen Phase mit einer Fettphase, die aus einem Fett mit einem derartigen Fettfeststoffprofil besteht, daß ≧ 50 % des vorliegenden Fettes bei 20°C fest sind und ≦15 % des vorliegenden Fettes bei 35°C fest sind;
b) Erhitzen der Mischung auf eine ausreichend hohe Temperatur zum Schmelzen des Fettes;
c) Homogenisieren der Mischung zur Erzielung einer durchschnittlichen Tröpfchengröße des dispergierten Fettes nicht über 10 Mikrometern und zum Erhalt eines Rahms;
d) Abkühlen des Rahms zum Granulieren der Fettphase;
e) Mischen des granuliertes Fett enthaltenden Rahms mit einem weiteren Rahm, so daß der Gesamtfeststoffgehalt:
| | |
|---|---|
| N₅ = 40 - 95 | N₃₀ = 0,1 - 15 |
| N₁₀ = 25 - 90 | N₃₅ = 0 - 5 |
| N₂₀ = 15 - 35 | |
ist, und
f) Einführen des Gemisches in eine Kühl- und Kirneinheit, worin die Phaseninversion stattfindet.

23. Verfahren nach Anspruch 22, bei welchem
a) in Schritt (b) die Mischung aus der Fettphase und der wäßrigen Phase auf 50 bis 90°C erhitzt wird,
b) in Schritt (c) die Emulsion zur Erzielung einer Tröpfchengröße im Bereich von 2 bis 5 »m (Mikrometern) homogenisiert wird und
c) in Schritt (f) das Kirnen bei 4 bis 10°C erfolgt.

24. Verfahren zur Herstellung eines gekirnten W/O-Emulsionsbrotaufstriches gemäß Anspruch 1, welches umfaßt:
a) Herstellen eines O/W-Emulsionrahms durch Mischen einer wäßrigen Phase mit einer Fettphase, die aus einem Fett mit einem derartigen Fettfeststoffprofil besteht, daß ≧ 50 % des festen Fettes bei 20°C vorliegen und ≦ 15 % des festen Fettes bei 35°C vorliegen;
b) Mischen der so erhaltenen O/W-Emulsion mit einem oder mehreren weiteren Rahmen, so daß das Gemisch ein Gesamtfeststoffprofil von
| | |
|---|---|
| N₅ = 40 - 95 | N₃₀ = 0,1 - 15 |
| N₁₀ = 25 - 90 | N₃₅ = 0 - 5 |
| N₂₀ = 15 - 35 | |
hat;
c) Erhitzen der Mischung auf eine ausreichend hohe Temperatur zum Schmelzen mindestens eines Teils des Fettes;
d) Homogenisieren des Gemischs zur Erzielung einer durchschnittlichen Tröpfchengröße des dispergierten Fettes nicht über 10 Mikrometern und zum Erhalt eines Rahms; und
e) Einführen des Gemisches in eine gekühlte Kirneinheit, in der die weitere Kristallisation und Phaseninversion stattfindet.

25. Öl-in-Wasser-Emulsionsrahm, umfassend eine Fettphase, die in Tröpfchen von nicht mehr als 20 Mikrometern Durchmesser dispergiert ist, wobei die Fettphase insgesamt ein Fettfeststoffprofil bei der angegebenen Temperatur von
| | | |
|---|---|---|
| N₅ = 40 - 95 | N₁₀ = 25 - 90 | N₂₀ = 15 - 35 |
| N₃₀ = 0,1 - 15 | N₃₅ = 0 - 5 | |
hat, wobei die Tröpfchen aus einer ersten Population von Tröpfchen eines Fettes mit einem Fettfeststoffprofil, so daß ≧ 50 % des Fettes bei 20°C fest sind und ≦15 % des Fettes bei 35°C fest sind, und einer zweiten Population von Tröpfchen eines Fettes mit einem Fettfeststoffprofil bestehen, so daß das Gesamtfettfeststoffprofil vorliegt.

26. Öl-in-Wasser-Emulsionsrahm nach Anspruch 25, in welchem die Fettphase ein Fett (i) mit der folgenden Triglyceridzusammensetzung umfaßt:
SSS-Triglycerid 1 bis 9 Gew.-%
SOS-Triglycerid 30 bis 75 Gew.-%
SSO-Triglycerid 3 bis 12 Gew.-%,
wobei der Rest des Fettes (i) bis zu 100 Gew.-% aus SOO- und SLS-Triglyceriden besteht, worin
S = gesättigter C₁₆-C₁₈-Fettsäurerest
O = Ölsäurerest
L = Linolsäurerest
ist.

## Revendications

1. Produit à tartiner en émulsion E/H possédant des propriétés analogues au beurre et qu'on obtient par un procédé de barattage comprenant :
a) une phase aqueuse, et
b) une phase grasse, ladite phase présentant globalement le profil suivant des solides gras exprimé en pourcentages et déterminé par résonnance magnétique nucléaire aux températures indiquées :
| | |
|---|---|
| N₅ = 40-95 | N₃₀ = 0,1-15 |
| N₁₀ = 20-90 | N₃₅ = 0-5 |
| N₂₀ = 15-35 | |
caractérisé en ce que ladite phase grasse comprend des granules de graisse dispersés ne faisant pas partie de la structure réticulaire tridimensionnelle des cristaux de graisse, les granules ayant une grosseur moyenne de particules ne dépassant pas 20 »m et, de préférence, comprise entre 3 et 6 »m.

2. Produit à tartiner selon la revendication 1, dans lequel la dureté mesurée à 5°C ne dépasse pas 5000 g/cm² et est comprise de préférence entre 1500 et 4000 g/cm².

3. Produit à tartiner selon la revendication 1, dans lequel la graisse ou le mélange de graisse constitue de 30 à 80% en poids de l'émulsion totale.

4. Produit à tartiner selon la revendication 1, dans lequel la graisse ou le mélange de graisse constitue de 35 à 65% en poids de l'émulsion totale.

5. Produit à tartiner selon la revendication 1, dans lequel la phase grasse comprend une graisse (i) caractérisée par la composition suivante de triglycérides :
triglycérides SSS 1-9% en poids
triglycérides SOS 30-75% en poids
triglycérides SSO 3 à 12% en poids,
le complément de la graisse (i) jusqu'à 100% en poids comprenant des triglycérides SOO et SLS dans lesquels :
S = restes d'acides gras saturés en C₁₆₋₁₈.
O = restes d'acide oléique
L = restes d'acide linoléique.

6. Produit à tartiner selon la revendication 5, dans lequel la graisse (i) est une fraction médiane de palme caractérisée par la composition suivante de triglycérides :
SSS = 1-5% en poids
SOS = 50 à 75% en poids
SSO = 3 à 9% en poids
le complément de triglycérides de la graisse (i) jusqu'à 100% en poids consistant en triglycérides SOO et SLS.

7. Produit à tartiner selon la revendication 5, dans lequel la graisse (i) constitue plus de 30% en poids et, de préférence, de 35 à 80% en poids par rapport au total de graisse.

8. Produit à tartiner selon la revendication 5, dans lequel la graisse (i) est une fraction médiane de palme caractérisée par le profil suivant des triglycérides :
SSS = 1 à 9% en poids
SOS = 30 à 50% en poids
SSO = 5 à 12% en poids
le complément des triglycérides de la graisse (i) jusqu'à 100% en poids consistant en triglycérides SOO et SLS.

9. Produit à tartiner selon la revendication 8, dans lequel la graisse (i) constitue plus de 30% en poids et de préférence de 31 à 85% par rapport au poids total de graisse.

10. Produit à tartiner selon la revendication 1, dans lequel la phase grasse comprend une graisse (ii) choisie parmi la graisse de beurre ou une fraction de graisse de beurre, une graisse laurique hydrogénée ou une fraction de celle-ci et un mélange interestérifié qu'on obtient à partir de graisse palmitique ou stéarique hydrogénée et une graisse laurique hydrogénée, un produit laurique non hydrogéné, l'huile de palme, la graisse de suif ou des fractions de ceux-ci.

11. Produit à tartiner selon la revendication 10, dans lequel la graisse (ii) constitue de 1 à 30% an poids de la graisse totale.

12. Produit à tartiner selon la revendication 1, dans lequel la phase grasse comprend une huile (iii) exempte de graisse cristallisée à 10°C.

13. Produit à tartiner selon la revendication 12, dans lequel l'huile (iii) constitue de 30 à 69% en poids de la graisse totale.

14. Produit à tartiner selon la revendication 1, dans lequel la phase aqueuse constitue de 30 à 70% en poids et, de préférence, de 35 à 65% en poids de l'émulsion totale.

15. Produit à tartiner selon la revendication 1, dans lequel la phase aqueuse contient un agent gélifiant ou épaississant comprenant une protéine, un i-carragheenane, un alginate de calcium ou des mélanges de ceux-ci.

16. Produit à tartiner selon la revendication 15, dans lequel la phase aqueuse contient de 1 à 15% de protéines de lait et de 1 à 5% en poids de gélatine par rapport à la phase aqueuse.

17. Produit à tartiner selon la revendication 16, dans lequel la phase aqueuse contient de 3 à 10% en poids de caséinate de sodium et de 2 à 5% en poids de gélatine.

18. Procédé de production d'une émulsion barattée e/h formant un produit à tartiner selon la revendication 1, qui consiste :
a) à produire une émulsion h/e en crème en mélangeant une phase aqueuse avec une phase grasse contenant une graisse ayant le profil suivant des solides de graisse:
| | |
|---|---|
| N₅ = 40 à 95 | N₃₀ = 0,1 à 15 |
| N₁₀ = 20 à 90 | N₃₅ = 0-5 |
| N₂₀ = 15-35 | |
b) à chauffer le mélange à une température suffisamment élevée pour faire fondre la graisse ;
c) à homogénéiser le mélange pour obtenir une grosseur moyenne des gouttelettes de la graisse dispersée ne dépassant pas 20 »m et obtenir une crème,
et
d) à introduire la crème homogénéisée dans une installation de refroidissement et de barattage dans laquelle ont lieu la cristallisation et l'inversion de phases.

19. Procédé selon la revendication 18, dans lequel le mélange de la phase grasse et de la phase aqueuse est :
a) chauffé à 40-80°C ;
b) homogénéisé pour réaliser une grosseur de gouttelettes comprise entre 3 et 6 »m pour obtenir une crème ;
c) crème qui est refroidie pendant qu'on applique un régime doux de cisaillement, de sorte que la température tombe à 15-25°C ;
d) émulsion partiellement cristallisée et partiellement inversée qui est finalement soumise à un supplément de travail et refroidie de sorte que la température tombe à 5-13°C et on obtient ainsi un produit à tartiner en émulsion e/h.

20. Procédé selon la revendication 18, dans lequel l'émulsion partiellement inversée et cristallisée est soumise à un travail supplémentaire et est refroidie dans un Votator (maque déposée), unité du type à travail ardu sous vide, ou dans un appareil de post-travail d'une machine à fabrication du beurre en continu.

21. Procédé selon la revendication 18, dans lequel la proportion de la phase aqueuse dans le produit à tartiner en émulsion e/h barattée est sensiblement égale à la proportion de la phase aqueuse dans l'émulsion de départ h/e.

22. Procédé de production d'un produit à tartiner en émulsion e/h barattée selon la revendication 1, qui consiste :
a) à produire une crème en émulsion h/e en mélangeant une phase aqueuse avec une phase grasse consistant en une graisse ayant un profil de solides tel que ≧ 50% de la graisse présente sont solides à 20°C et ≦ 15% de la graisse présente sont solides à 35°C ;
b) à chauffer le mélange à une température suffisamment élevée pour fondre la graisse ;
c) à homogénéiser le mélange pour obtenir une grosseur moyenne des gouttelettes de la phase dispersée ne dépassant pas 20 »m et obtenir une crème ;
d) à refroidir la crème de façon à granuler la phase grasse ;
e) à mélanger la crème granulée contenant la graisse avec une autre crème pour obtenir un mélange dans lequel la teneur totale en solides aux températures indiquées est :
| | |
|---|---|
| N₅ = 40-95 | N₃₀ = 0,1-15 |
| N₁₀ = 25-90 | N₃₅ = 0-5 |
| N₂₀ = 15-35 | |
et
f) à admettre le mélange dans une unité de refroidissement et de barattage dans lequel a lieu l'inversion des phases.

23. Procédé selon la revendication 22, dans lequel :
a) au stade (b), le mélange de la phase grasse et de la phase aqueuse est chauffé à une température de 50 à 90°C ;
b) au stade (c), on homogénéise l'émulsion pour obtenir une grosseur de gouttelettes de 2 à 5 »m ; et
c) au stade (f), on effectue le barattage à 4 à 10°C.

24. Procédé de production d'une émulsion e/h formant un produit à tartiner barattée selon la revendication 1, qui consiste :
a) à produire une crème d'émulsion h/e en mélangeant une phase aqueuse avec une phase grasse contenant une graisse dont le profil des solides est tel que ≧ 50% de graisse sont solides à 20°C et ≦ 15% de graisse sont solides à 35°C ;
b) à mélanger l'émulsion h/e ainsi obtenue avec une ou plusieurs autres crèmes tel que le mélange obtenu présente un profil de solides de graisse à la température indiquée de :
| | |
|---|---|
| N₅ = 40-95 | N₃₀ = 0,1 à 15 |
| N₁₀ = 25 à 90 | N₃₅ = 0 à 5 |
| N₂₀ = 15 à 35 | |
(c) à chauffer le mélange à une température suffisamment élevée pour fondre au moins une portion de la graisse ;
(d) à homogénéiser le mélange pour obtenir une grosseur moyenne de gouttelettes de la graisse dispersée ne dépassant pas 20 »m et obtenir une crème ; et
(e) à introduire le mélange homogénéisé dans une unité de refroidissement et de barattage dans laquelle ont lieu une nouvelle cristallisation et une inversion de phases.

25. Crème en émulsion huile-dans-eau comprenant une phase grasse dispersée en gouttelettes ne dépassant pas 20 »m de diamètre, ladite phase grasse ayant un profil global de solides gras, à la température indiquée de :
| | | |
|---|---|---|
| N₅ = 40-95 | N₁₀ = 25-90 | N_{20 = 15-35} |
| N₃₀ = 0,1-15 | N₃₅ = 0-5 | |
lesdites gouttelettes étant formées d'une première population de gouttelettes de graisse ayant un profil de solides gras tel que ≦ 50% de la graisse sont solides à 20°C et ≧ 15% de la graisse sont solides à 35°C, et une seconde population de gouttelettes de graisse ayant un profil de solides gras tel que le profil global des solides gras subsiste.

26. Crème en émulsion huile-dans-eau selon la revendication 25, dans laquelle la phase grasse comprend une graisse (i) ayant la composition suivante de triglycérides :
triglycérides SSS : 1 à 9% en poids
triglycérides SOS : 30 à 75% en poids
triglycérides SSO : 3 à 12% en poids,
le restant de la graisse (i) jusqu'à 100% consistant en triglycérides SOO et SLS dans lesquels :
S = résidu d'acides gras saturés de 16 ou 18 atomes de carbone,
O = résidu d'acide oléique,
L = résidu d'acide linoléique.
